# EUROPEAN PATENT SPECIFICATION

(11) **EP 1 808 377 B1**
(45) Date of publication and mention of the grant of the patent: **15.02.2012**
(21) Application number: 05799359.4
(22) Date of filing: 27.10.2005
(51) Int. Cl.: B65D 30/02, B32B 27/30, B32B 27/32, B65D 65/40

(54) **EASY-TO-OPEN BAG**
LEICHT ZU ÖFFNENDER BEUTEL
SAC FACILE À OUVRIR

(30) Priority: 01.11.2004 JP 2004318168; 08.11.2004 JP 2004323283
(43) Date of publication of application: 18.07.2007
(73) Proprietor: Asahi Kasei Chemicals Corporation, Tokyo 100-8440 (JP)
(72) Inventor: KATO, Kazufumi, 1008440 (JP); MIZUTARI, Yuuji, 1008440 (JP)
(74) Representative: Brookes Batchellor LLP
(86) International application number: PCT/JP2005/019752
(87) International publication number: WO 2006/049070

(56) References cited:
- EP-A2- 0 369 447
- GB-A- 1 354 907
- GB-A- 2 023 497
- JP-A- 11 171 205
- JP-A- 60 223 839
- JP-A- 2002 283 519
- JP-A- 2003 238 703
- JP-A- 2004 167 981
- JP-A- 2004 230 795
- JP-A- 2005 239 914
- US-A- 5 755 081

## Description

### Technical Field

The present invention relates to an easy opening bag, more particularly to a bag which has high gas-barrier properties, good long-term storage properties and can be opened easily and straightly when in use for insuring removal of contents therefrom.

### Background Art

A bag made of a laminate of cellophane and polyethylene is generally used as a bag into which drugs, foods or the like can be dispensed in a small amount, and which can be opened easily. Such a bag is heat-sealed with cellophane positioned at the outside of the bag and with polyethylene positioned at the inside of the bag. Such a bag is used as an easy opening bag which can be torn from an end thereof, which is difficult for a bag in which a different film is used as a surface material.

However, the openability of the above described bag is insufficient, so that a tear surface may deviate from a tear direction to a direction different from the tear direction, leading to a spill of contents and difficulty in removal of the same. Further, cellophane absorbs much water because it is originally made of cellulose. Absorption of water greatly curls a laminated film, which increases the loss when a bag is made from the laminated film. Furthermore, even when a bag is made and contents are contained therein, absorption of water may cause the contents in the bag to get wet. For example, a powdered medicine in a bag which absorbed water may get wet, leading to difficulty in removal after opening the bag and danger of deterioration of the medicine.

Cellophane having a different hygroscopic degree may provide a film different in rigidity and impact resistance. As a result, there have been problems such as a loss during bag-making or processing of a laminate, liability to a break by impact and formation of pinholes from a folded part. These problems have led to a spill of contents to the outside or deterioration of contents particularly in the case of drugs.

A film of general-purpose polyethylene, polypropylene or polyester has been attempted to use instead of cellophane. However, since such a film originally has a low rigidity, it has been impossible to make an easily openable bag from the film. Therefore, a cutout or a notch has been provided in a bag, but such a bag is not the one openable from any part of the bag. Sometimes, the cutout or notch has had an adverse effect on the bag, including damaging contents during processing.

In order to solve these problems, a technique to make an easy opening bag is disclosed (Patent Document 1). In this technique, cellophane is replaced by a biaxially stretched polystyrene film of a general-purpose polystyrene resin as a thermoplastic resin film. A laminated film is prepared by laminating the stretched polystyrene film to a heat-sealable polyolefin film. The resulting laminated film is heat-sealed to obtain the easy opening bag.

However, when this laminated film was used, there was a problem of difficulty in heat sealing, because the melting points of the resins used, polystyrene and polyolefin, are close. The reason is as follows. The above described laminated film of cellophane and polyethylene is universally prevalent as a bag for packaging drugs, and bag-making machines are basically designed with cellophane that is unmeltable in mind. Therefore, when this laminate was used in this type of bag-making machine, it was impossible to satisfy the heat sealing temperature of this laminate, resulting in shrinkage of the heat-sealed part. Thus, it was impossible to obtain a good bag. The bag obtained under such conditions was a bag which cannot be easily opened because the resins forming the film were solidified due to the melting of the polystyrene resin. When heat sealing temperature for bag-making was decreased to obtain a good bag, bag-making speed became slower, resulting in low efficiency. Consequently, this laminate has not been practically used yet for the above described purposes.

In order to solve the above problem, a technique to make a bag efficiently is disclosed (Patent Document 2). In this technique, the difference in melting points between the resins for a polystyrene film and a polyolefin film composing a laminated film is increased by using a special polyolefin as a heat sealing resin. However, the melting point of the polyolefin disclosed was 70°C to 105°C, and it was impossible to achieve good heat sealing even when this polyolefin was laminated to general-purpose polystyrene to form a laminated film. Namely, general-purpose polystyrene has a softening temperature of about 105°C, which can hardly provide an effective difference in melting point. Thus, it was impossible to increase heat sealing efficiency. Moreover, the set-temperature in the universally prevalent bag-making machines has problems with heat sealing of this laminated film. It is necessary to use a special bag-making machine which is set at a lower heat sealing temperature for obtaining a good bag. Thus, the bag of this film is not widespread yet.

Another technique to make a bag efficiently by heat sealing two films is disclosed (Patent Document 3). In this technique, a resin composition using a crystalline styrenic polymer having a highly syndiotactic configuration is used to increase the difference between the Vicat softening point of a resin for a polystyrene film and the melting point of a resin for a polyolefin film in a laminated film. However, it was impossible to obtain a practical bag from the polystyrene having a syndiotactic configuration, because when a film of the polystyrene is laminated to polyolefin to obtain a laminated film or when the obtained laminated film is formed to a bag, heat conducts through the film in each process, resulting in loss of transparency or partial whitening of the film due to the crystallinity of the polystyrene. Furthermore, when the polystyrene having a syndiotactic configuration is formed to a transparent film, a dedicated facility is required. It was difficult to obtain a uniform transparent film due to difficult process control of the facility, resulting in a high-cost product. Consequently, the bag of this film is also not widespread yet.

There is disclosed an invention aiming at easy openability using a laminated film as a base film (Patent Document 4). In this invention, the laminated film is obtained by laminating a widely used resin film such as a polypropylene film or a polyester film to an easily tearable film such as a polystyrene film. However, the film of this invention had poor tearability and straightness of tear, because a common film aiming at tear-resistance was used in this invention, which was just a stack of films having opposite properties.
Patent Document 1: JP-A-63-79
Patent Document 2: JP-A-11-171196
Patent Document 3: JP-A-5-338089
Patent Document 4: JP-A-10-166529

Further disclosures relevant to the present invention can be found in GB 1 354 907A, GB 2 023 497A, US 5 755 081A and EP 0369477A2.

GB 1 354 907A discloses a laminate consisting of at least two plies (A) and (B) firmly bonded together, wherein ply (B) comprises at least 30% by weight of a styrene polymer having a Vicat softening point higher than 100°C. The laminate is a laminate of styrene polymers, which combines the characteristics of each styrene polymer so that it has high heat distortion and toughness.

GB 2 023 497A discloses a multiple-layered flexible plastics sheet comprising (a) a first layer of a block copolymer having rubbery olefin blocks and blocks of a polystyrene, and a polyolefin having a Vicat softening temperature of about 120°C; and (b) a second layer consisting of a polyolefin which is semi-crystalline in order to exhibit low permeability to water vapor.

US 5 755 081A discloses a multilayer film comprising: (a) a first layer comprising a material having a melting point of at least 145°C; (b) a second layer comprising a colorant blended with a polymer having a Vicat softening point ranging from 100°C to 140°C; (c) a third layer comprising a material having a melting point of at least 135°C; and (d) a fourth layer comprising a material which is capable of forming a heat-seal, wherein, said second layer is positioned between said first and third layers and said fourth layer is an exterior layer.

EP 0 369 447 A2 discloses a laminating film which comprises a pair of coextruded multilayer inflation film layers disposed symmetrically and joined by blocking, and the inner layers joined by blocking being composed of a resin having Vicat softening point lower than 120°C.

### Disclosure of the Invention

### Problems to be Solved by the Invention

It is an object of the present invention to provide a bag which is processed from a film excellent in processing suitability without wrinkles and deformation, can be opened easily and straightly in the same direction as the tear direction, and can ensure easier removal of contents therefrom. Further, it is another object of the present invention to provide a bag having improved moistureproof effect and high storage stability of contents by interleaving an aluminum foil as an interlayer. Means for Solving the Problems

The present invention has been achieved as a result of intensive studies to solve the above-described problems conducted by the present inventors. The present invention provides the following:
(1) A bag comprising a laminated film of (a) a polystyrene film which comprises an amorphous polystyrene copolymer resin and has a Vicat softening temperature of 110 to 155°C, which is measured in accordance with ASTM-D-1525; and (b) a polyethylene film, characterised in that the polystyrene film is biaxially stretched and is disposed outside the bag and the polyethylene film is disposed inside the bag.
(2) The bag according to (1), characterized in that an aluminum foil is disposed between the biaxially stretched polystyrene film and the polyethylene film.
(3) The bag according to (1), characterized in that the biaxially stretched polystyrene film has a heat shrinkage stress of 300 KPa to 6,000 KPa.
(4) The bag according to (1), characterized in that the amorphous polystyrene copolymer resin comprises at least one selected from a styrene-acrylic acid copolymer resin, a styrene-methacrylic acid copolymer resin, a styrene-maleic anhydride copolymer resin, and a styrene-α-methyl styrene copolymer resin.
(5) The bag according to (1), characterized in that the biaxially stretched polystyrene film comprises at least one polystyrene copolymer elastomer selected from a high-impact polystyrene, a styrene-conjugated diene copolymer, and a styrene-aliphatic carboxylic acid copolymer in an amount of 0.5 to 35% by weight.
(6) The bag according to (1), characterized in that the laminated film has a HAZE of 70% or less.
(7) The bag according to (1), characterized in that the polyethylene film contains an antistatic agent.
(8) The bag according to (1), characterized in that the laminated film comprises only the biaxially stretched polystyrene film and the polyethylene film bonded thereto.
(9) The bag according to (8), characterized in that the biaxially stretched polystyrene film and the polyethylene film are bonded with an adhesive. Advantages of the Invention

The present invention can provide a bag which is processed from a film excellent in processing suitability without wrinkles and deformation, can be opened easily and straightly in the same direction as the opening direction, and can ensure easier removal of contents therefrom. Further, the present invention can provide a bag having excellent moistureproof effect and improved storage stability of contents by interleaving an aluminum foil as an interlayer.

### Best Mode for Carrying Out the Invention

The present invention will be described in detail below mainly with reference to particularly preferred embodiments.

The biaxially stretched polystyrene film used in the present invention comprises an amorphous polystyrene copolymer resin. In terms of heat resistance of a bag, the content of the amorphous polystyrene copolymer resin in the biaxially stretched polystyrene film is preferably 65% by weight or more, more preferably 70% by weight or more.

The biaxially stretched polystyrene film used in the present invention comprising an amorphous polystyrene copolymer resin has a Vicat softening temperature of 110 to 155°C, preferably 113 to 147°C, more preferably 120 to 140°C.

The Vicat softening temperature of the film is determined in accordance with ASTM-D-1525. A Vicat softening temperature of higher than 110°C provides a suitably high rigidity of a bag, leading to particularly good straightness of tear and tearability (tearability of a film which is easily tearable with one's hands without notching the same). Further, a Vicat softening temperature of higher than 110°C provides a bag with an undistorted shape and no pinholes at a heat-sealed part, because when the stretched polystyrene film is subjected to poly-lamination to a polyethylene film as a heat sealing layer, the polyethylene film is not liable to heat shrinkage, and because when laminated film is heat-sealed to make a bag, the heat-sealed part is also not liable to heat shrinkage.

A Vicat softening temperature lower than 155°C provides a suitable toughness to a bag, resulting in a bag which is neither easily broken nor forms pinholes when it is impacted. Further, a Vicat softening temperature of lower than 155°C can also impart a satisfactory straightness of tear and tearability to a bag.

Vicat softening temperature is an important factor because straightness of tear and tearability of the above-described bag depend on the Vicat softening temperature of a film to be used.

The amorphous polystyrene copolymer resin may be, but is not limited to, a styrene copolymer resin which is used singly or may be a combination of a styrene copolymer resin with a different resin and/or an additive.

The styrene copolymer resin may be obtained by copolymerizing styrene monomer with an optional monomer. Specifically, examples of the optional monomer include styrene derivatives such as o-methylstyrene, m-methylstyrene, p-methylstyrene, t-butylstyrene, α-methylstyrene, β-methylstyrene and diphenylethylene; conjugated dienes such as butadiene and isoprene; alkyl substituted methacrylate compounds such as methyl methacrylate, ethyl methacrylate, propyl methacrylate, butyl methacrylate, hexyl methacrylate and cyclohexyl methacrylate; alkyl substituted acrylate compounds such as methyl acrylate, ethyl acrylate, propyl acrylate, butyl acrylate, hexyl acrylate and cyclohexyl acrylate; vinyl monomers such as methacrylic acid, acrylic acid, maleic anhydride, N-substituted anhydrous maleimide, acrylonitrile, methacrylonitrile, chlorostyrene and bromostyrene; and the like. These monomers can be used singly or in combination of two or more. In the present invention, these styrenic copolymer resins may be used singly or in combination of two or more.

In order to impart heat resistance and good tearability and stiffness of a bag obtained, the amorphous polystyrene copolymer resin more preferably comprises at least one selected from a styrene-acrylic acid copolymer resin, a styrene-methacrylic acid copolymer resin, a styrene-maleic anhydride copolymer resin, and a styrene-α-methyl styrene copolymer resin.

The weight percent of styrene in the amorphous polystyrene copolymer resin may be selected so that the Vicat softening temperature of the film according to the present invention can be in the range of 110 to 155°C, and it is preferably 50% by weight or more, more preferably 70% by weight or more. The above weight percent of styrene is not limited because it depends on the percentage of monomers to be copolymerized other than styrene and an additive to be added in the manufacture of a biaxially stretched polystyrene film. For example, when acrylic acid, methacrylic acid or maleic anhydride is used as a monomer for a suitable copolymer resin, the percentage of the monomer to be copolymerized is preferably 3 to 30% by weight in order to impart a Vicat softening temperature of 110 to 155°C to a biaxially stretched polystyrene film comprising an amorphous polystyrene copolymer resin. Similarly, when α-methylstyrene is used, it is preferably from 9 to 50% by weight. Copolymerization of these monomers in a preferred range can improve heat resistance and extrusion processability during the forming of a film.

The amorphous polystyrene copolymer resin preferably has an atactic or isotactic configuration. As used in the present invention "amorphous" means a crystallinity of 10% or less. The crystallinity is preferably 5% or less. The closer to the complete amorphousness is the better. Crystallinity is determined by differential scanning calorimetry (DSC), wherein the crystallinity can be calculated generally from a calorific value derived from crystal melting. An amorphous resin or a resin having a low crystallinity is preferred, because a film can be formed from such a resin without whitening; and the film is not crystallized at the subsequent poly-lamination with polyolefin or bag-making, leading to a bag having high transparency and enhanced toughness. Furthermore, an amorphous film can solve a problem ofrecrystallization or the like when it is processed to a bag, making a bag with improved heat shrinkage and tearability.

In the present invention, a method for producing the amorphous polystyrene copolymer resin is not limited, but any known production method can be used. Examples of more general polymerization methods of styrenic polymers include polymerization methods by free-radical solution polymerization, free-radical suspension polymerization and free-radical emulsion polymerization using heat and/or an initiator, anionic polymerization using an organometallic compound, coordination anionic polymerization using a transition metal complex, cationic polymerization using a Lewis acid, and the like. Commercially available resins can also be used. Examples of commercially available resins include, but are not limited to, styrene-methacrylic acid copolymer resins such as G9001 (product name) manufactured by Polystyrene Japan Corporation and Ryulex (registered trademark) A-14 manufactured by Dainippon Ink and Chemicals, Inc., and styrene-maleic anhydride copolymer resins such as DYLARK (registered trade name) 232, 332 manufactured by NOVA Company.

The molecular weight of the amorphous polystyrene copolymer resin is not limited, but it may be the one that can provide a sufficient melt viscosity for forming a film. Further, the content of styrenic low molecular weight components such as monomer, dimer and trimer remaining in the obtained biaxially stretched polystyrene film is not limited, but it is preferred that the content be as low as possible in consideration of drugs or food to be contained in the bag as components, preferably 1,000 ppm or less.

Various resins may be added to the amorphous polystyrene copolymer resin for the purpose of providing film-forming properties and impact resistance as long as they do not impair requirements and characteristics of the present invention. The various resins may be any resin as long as it is compatible with the amorphous polystyrene copolymer resin and include, for example, ABS resins, PPE resins, polystyrenic elastomers, and the like. In terms of compatibility, a polystyrenic elastomer is preferred.

A polystyrenic elastomer is a material which imparts film-forming properties and impact resistance to the amorphous polystyrene copolymer resin. The material generally has rubber elasticity at room temperature and contains a rubber component (soft segment) exhibiting elasticity in the molecule. The Vicat softening temperature of a polystyrenic elastomer is lower than that of polystyrene (105°C), generally lower than 90°C. Examples of polystyrenic elastomers include high-impact polystyrenes, styrene-conjugated diene copolymers, styrene-aliphatic carboxylic acid copolymers, and the like. Addition of at least one selected from the above-described polystyrenic elastomers provides a more preferred aspect.

The polystyrenic elastomer is preferably added in an amount of 0.5 to 35% by weight, more preferably 1 to 30% by weight in the biaxially stretched polystyrene film, in terms of film-forming properties, the balance of impact resistance, heat resistance and stiffness of the resulting bags, and the degree of influence to degrade transparency. When the addition amount is 0.5% by weight or more, film-forming properties when the film is formed is stabilized, resulting in a bag having improved impact resistance, and when the addition amount is 35% by weight or less, the resulting bag has good tearability, heat resistance and stiffness, and high transparency. The polystyrenic elastomer may be added before a film is produced, where its amount and type may be preferably selected in a suitable manner by those skilled in the art as long as the effects of the present invention are not impaired.

It is also effective to add stabilizers such as heat stabilizers, antioxidants, light-resisting agents and antistatic agents to the amorphous polystyrene copolymer resin in order to improve heat stability, mechanical stability, weatherability and light resistance. Examples of heat stabilizers, antioxidants and light-resisting agents include phenol-based, amine-based, phosphorus-based, sulfur-based and hindered amine-based stabilizers, and the like. These stabilizers are preferably mixed as long as they are used in an amount that does not impair the objects and characteristics of the present invention.

Other than the above-described stabilizers, known additives such as particulate anti-blocking agents such as inorganic particulates and organic particulates, plasticizers, slip additives, coloring agents and antistatic agents can be mixed in an amount that does not impair the effects and characteristics of the present invention.

The method for producing the biaxially stretched polystyrene film is not limited, but it includes a tentering method in which the resin is melted and extruded from a T-die or the like, and the resulting film is longitudinally stretched by stretching rolls and then transversely stretched by a tenter; a method in which the resin is extruded through a circular die and stretched by inflation; and the like. The stretched film should be a biaxially stretched film in order to achieve easy tearability which is an important object of the present invention. Specifically, it is possible to make a bag having easy tearability which can be easily torn by hand in any direction by biaxially stretching the film in the machine direction (MD) and in the transverse direction (TD). In other words, it is possible to obtain a bag which can be easily torn by hand with good straightness of tear by using the polystyrene copolymer resin of the present invention and by controlling the molecular orientation of the resin. High molecular orientation of the resin enhances tearability of the film at the start of the tearing, enabling easy tearing by hand and improving straightness of tear because of the molecular orientation in the tearing direction.

The biaxially stretched polystyrene film of the present invention preferably has a heat shrinkage stress of 300 KPa to 6,000 KPa in any direction, more preferably 400 KPa to 4,000 KPa, in terms of the stiffness, heat shrinkage and tearability of the resulting film. The heat shrinkage stress is determined by the method to be described below. The straightness of tearing and tearability in the present invention depends on the molecular orientation of the resin. The heat shrinkage stress can be used as an index that can quantitatively represent the molecular orientation. When the polystyrenic resin film of the present invention has a heat shrinkage stress of 300 KPa or more, the bag has high impact strength and flexural strength and is not easily bent or broken by external forces. Further, the bag has improved straightness of tear and tearability because of sufficient orientation of resin polymers. When the heat shrinkage stress is 6,000 or less, the film or the laminate does not shrink during the bag-making, leading to a bag which is not liable to be wrinkled.

The heat shrinkage stress can be controlled by the degree of stretching, a stretching temperature or the like in a process of stretching by tenter or stretching by inflation. Namely, a low degree of stretching provides a small heat shrinkage stress, and a high degree of stretching provides a large heat shrinkage stress. Further, in the case where the degree of stretching is the same, a higher stretching temperature provides a smaller heat shrinkage stress, and a lower stretching temperature provides a larger heat shrinkage stress. Control of the degree of stretching and the stretching temperature is an important point in the forming of the film. Heat setting after a film is obtained by a process of stretching by tenter or stretching by inflation is a good method for controlling the heat shrinkage stress. The heat setting may be performed at a constant length or freely, and setting temperature may be properly selected.

The heat shrinkage (shrinkage when a film is immersed in an oil of 120°C for 10 seconds) of the biaxially stretched polystyrene film used in the present invention is, but is not limited to, preferably 0 to 10%, more preferably 0 to 7%. When the heat shrinkage is 10% or less, the bag made from the film will not have wrinkles.

A process for stretching the polystyrene film extruded from a T-die or the like may include, but is not limited to, stretching by inflation, stretching by tenter, and the like. When stretching temperature is low, the resin has a high melt viscosity, resulting in high molecular orientation of the resin even at a low stretch ratio. On the other hand, when stretching temperature is high, the resin has a low melt viscosity, resulting in low molecular orientation of the resin even at a high stretch ratio. Thus, stretching temperature is not limited. In the present invention, it is important to control the molecular orientation of the resin, which is directly related to the heat shrinkage stress of the biaxially stretched polystyrene film.

In the process of stretching by inflation, the stretch ratio in the machine direction (MD) and the transverse direction (TD) is each preferably 3 to 12 times. Particularly, the stretch ratio is more preferably in the range of 5 to 10 times in terms of good tearability, high stiffness and uniformity of stretching, which are characteristics of the bag provided by the orientation by stretching. The stretch ratio of 3 times or more is preferred because the degree of orientation by stretching is suitable to obtain a bag having high impact resistance and good tearability. When the stretch ratio is 12 times or less, the film has a low heat shrinkage percentage, from which a bag having no wrinkles or the like can be made.

In the process of stretching by tenter, the stretch ratio in the case of simultaneous biaxial stretching is each preferably 1.5 to 8 times in the MD direction or the TD direction. Particularly, the stretch ratio is more preferably in the range of 2 to 6 times in terms of good tearability and uniformity of stretching, which are characteristics of the bag provided by the orientation by stretching. The stretch ratio of 1.5 times or more is preferred because the degree of orientation by stretching is suitable to obtain a bag having high impact resistance and good tearability. The stretch ratio of 8 times or less is also preferred because the degree of orientation by stretching is suitable to obtain a film which does not shrink during fabrication such as poly-lamination or bag-making.

The stretch ratio in the case of successive biaxial stretching with tenter is preferably 1.3 to 4 times in the MD direction and 4 to 8 times in the TD direction. Since in the successive biaxial stretching with tenter a film is stretched first in the MD direction and then in the TD direction, the film is preferably stretched in different conditions in the MD and TD directions, respectively, in order to balance the molecular orientation.

In the present invention, the tearability of a bag is about the same in every direction. Therefore, when the bag is torn, it can be easily opened in any direction, and the propagation of tearing tends to proceed in the same direction as the direction of tearing. Since a bag generally has a rectangular shape, the opening will be in the longitudinal direction or in the transverse direction of the bag. Therefore, the bag can be easily opened by hand from both longitudinal and transverse directions, and the propagation of tearing tends to proceed in the same direction as the direction of tearing. These characteristics are significantly different from those of cellophane and other plastic films and are particularly effective parts of the present invention. Namely, if a torn part of a bag containing powdered drugs or food propagates in a different direction from the direction intended to be opened, the contents can spill from the bag at the opening thereof. In the case of drugs, the dose is prescribed individually, and the amount of the contents is often strictly specified. Therefore, this straightness of tear provides high effectiveness.

Further, it is possible to make a bag which can be torn easily and straightly only from one direction of the bag. Namely, it is possible to make a bag which can be easily opened only from one direction of the bag and cannot be easily opened from the direction perpendicular to the opening direction. In such a bag, the tearability of the bag to be obtained can be changed by providing a great difference between the stretch ratios in the MD direction and in the TD direction when the biaxially stretched polystyrene film is produced. For example, when the tearability of the film is improved only in one direction, it is possible to make a bag using this film, which can be easily torn in one direction and can hardly be torn in the other direction. For example, easy tearing only in the transverse direction provides high effectiveness to stick packages or the like among bags for containing drugs and food, for the reason as described above.

The biaxially stretched polystyrene film preferably has a thickness of 5 to 60 µm. The film more preferably has a thickness of 10 to 50 µm, further preferably 15 to 40 µm, from the balance of stiffness, processing suitability and tearability of the bag. When the film has a thickness of 5 µm or more, the resulting bag is not liable to be broken, has high stiffness and has good processing suitability and workability. Further, when the film has a thickness of 60 µm or less, the resulting bag has good tearability, wherein the bag can be easily torn by hand. In addition, the final cost of the bag can be low.

The type of a polyethylene resin used as a heat sealing layer is not limited. Linear low density polyethylene, low density polyethylene, high density polyethylene or the like can be used as the polyethylene resin. A mixture thereof may also be used. Further, for the purpose of improving adhesiveness and controlling the softening point or heat sealing temperature of the resin, the resin is preferably an ethylene-vinyl acetate copolymer, an ethylene-acrylate copolymer, an ionically crosslinked acid copolymer (ionomer), or a copolymer of ethylene and α-olefin prepared by using a single site catalyst (metallocene-based catalyst), which are all heat sealable and the resin may be used singly or in combination with a different olefin resin.

The polyethylene film preferably has a thickness of 5 µm to 50 µm, more preferably 10 µm to 40 µm, further preferably 15 µm to 30 µm, wherein the thickness may be appropriately selected as long as the film functions as a heat sealing layer. When the film has a thickness of 5 µm or more, the film provides sufficient adhesive strength and hardly causes poor adhesion and pinholes during bag-making. When the film has a thickness of 50 µm or less, an increase in the cost can be suppressed, and the bag which is made has good easy-tearability.

The melting point of the polyethylene resin to be used as a heal sealing layer is lower than, but is not limited to, the Vicat softening temperature of the amorphous polystyrene copolymer resin preferably by 5°C or more, more preferably by 10°C or more, further preferably by 20°C or more. When the melting point of the polyethylene resin is lower than the Vicat softening temperature of the amorphous polystyrene copolymer resin by 5°C or more, it is possible to obtain a wide temperature range where the polyethylene film can be heat sealed, thereby capable of obtaining good bags.

The polyethylene resin film used as a heat sealing layer preferably has a lower tensile elongation. A polyethylene resin film having lower tensile elongation provides a bag which is more easily torn. Specifically, if a polyethylene resin film has a high elongation, only the polyethylene resin film in a laminated film is stretched when a bag is torn, causing delamination. Thus, good tearability of the biaxially stretched polystyrene film is inhibited, leading to a bag which is not easily opened. Consequently, the polyethylene resin film preferably has an elongation of 900% or less, more preferably 700% or less. Similarly, the polyethylene resin film preferably has a high elastic modulus. In order to obtain a bag with easy tearability, the polyethylene resin preferably has a bending modulus of elasticity of 50 MPa or more, more preferably 100 MPa or more. The tensile properties are determined in accordance with JIS K7113, and the bending modulus of elasticity is determined in accordance with JIS K7203.

In a more preferred aspect, in the case where powdered drug or food is filled and packaged into a bag, the polyethylene resin or the polystyrene resin is mixed or coated with an antistatic agent, in order to ensure easy filling of powder by removal of charge on the powder, or easy removal of the filled powder from the bag. Particularly, the antistatic agent is preferably present in the resin layer of the polyethylene side which is brought into direct contact with the contents, that is, in the inner layer. Further, when the contents are drugs, the method for mixing the antistatic agent is better than the method for coating it on the surface. The method for mixing the antistatic agent can make a bag in which no contents remain in the bag when it is used. Particularly, when drugs are contained in a bag, antistatic finish of the inner layer is more preferred because an intake of drugs should be limited.

Any method can be employed without limitation that laminates a heat-sealable polyethylene film with a biaxially stretched polystyrene film to form a laminated film. A pre-prepared biaxially stretched polystyrene film may be bonded to a polyethylene film to form a laminate, or a melted polyethylene may be extruded on a biaxially stretched polystyrene film for coating (poly-lamination). Poly-lamination is more convenient in terms of easiness in processing and provides a laminated film with enhanced adhesiveness. For the poly-lamination, it is preferred to use a biaxially stretched polystyrene film which is preliminarily treated so as to enhance adhesiveness. Also preferred are a method in which the activity of a polyethylene resin is increased by ozone treatment, radiation treatment or the like (the adhesiveness is increased by oxidizing the resin layer to be bonded) and a method in which a laminated film is subjected to aging (held in a heat treatment furnace for a predetermined period of time) after the lamination. A higher temperature for melt-extruding the polyethylene resin during poly-lamination provides a laminate film with a higher adhesiveness. The temperature is preferably between 280°C and 300°C.

It is preferred to preliminarily apply an anchor coating agent as an adhesive before lamination for the purpose of increasing the adhesion between the polystyrene film layer and the polyethylene film layer. The anchor coating agent is not particularly limited as long as it increases adhesion. Examples of the anchor coating agent that can be used include those based on urethane, imine, and butadiene; and natural rubber, casein, polyvinyl alcohol, polyacrylamide ether-maleic anhydride copolymers, styrenic copolymers, polyphenylene ether copolymers, and the like. Further, when a solution of the anchor coating agent in a solvent or diluent is applied to the polystyrene film, the solvent used is more preferably alcoholic or aqueous since such a solvent does not erode the film. The amount of coating of the anchor coating agent to be used as an adhesive is desirably as small as possible as long as adhesion is not impaired and is generally preferably 10 mg/m² or less, more preferably 5 mg/cm² or less.

The surface tension of the polystyrene film as an index of the adhesiveness thereof is preferably 35 mN/m or more, more preferably 40 mN/m or more. The upper limit is preferably, but is not limited to, 80 mN/m or less. The above-described surface tension values are achieved by physical and/or chemical methods as described above. Good adhesiveness can make full use of the good tearability of the polystyrene film as described above, and when the polystyrene film is laminated with a polyethylene film, the resulting bag can achieve easy openability. Further, when the bag is printed at the surface thereof to be used as a final product, it is preferably subjected to physical processing such as electrical discharge machining, coating, or other treatment for enhancing printability.

On the other hand, for the purpose of reducing production cost of a laminated film, a method is preferred in which respective resins are co-extruded to form the laminated film. In the method for producing a laminated film by co-extrusion, similar film-forming conditions for preparing the biaxially stretched polystyrene of the present invention can be applied. Further, an adhesive resin is preferably interleaved during co-extrusion between a polystyrene film layer and a polyethylene film layer as an adhesive for enhancing the adhesion between the polystyrene film layer and the polyethylene film layer. Examples of the resin for an adhesive include acrylate-modified polyethylene resins (for example, ethylene-methyl acrylate, ethylene-ethyl acrylate, ethylene-butyl acrylate, and the like), ionomer resins, acid-modified polyethylene resins (for example, modified resins modified with an acid such as maleic anhydride or carboxylic acid), ethylene-vinyl acetate resins, styrene-ethylene block copolymers, hydrogenated styrenic elastomers, polystyrene-poly(ethylene/butylene) block-polystyrene resins, styrene-ethylene-olefin crystalline block copolymers, polystyrene-poly(ethylene/propylene) block polymer resins, polystyrene-poly(ethylene/propylene) block-polystyrene resins, polystyrene-poly(ethylene-ethylene/propylene) block-polystyrene resins, and the like. As the resin for enhancing adhesion, acrylate-modified polyethylene resins and acid-modified polyethylene resins are preferred. The amount of the adhesive resin used as an adhesive is preferably as small as possible as long as the adhesion is not impaired and is preferably 5 µ/m² or less, more preferably 3 µ/m² or less.

The laminated film of the biaxially stretched polystyrene film and polyethylene film of the present invention has a heat shrinkage stress of preferably 300 KPa to 6,000 KPa, more preferably 100 KPa to 2,000 KPa in any direction.

The laminated film may be a film with an antistatic agent or an anti-fogging agent applied on one surface or both surfaces thereof for imparting functions such as antistatic properties, anti-fogging properties, oil resistance, and the like to the products or shaped articles of the film. Further, for the purpose of enhancing the adhesion between the biaxially stretched polystyrene film and the polyethylene film, the side of the polyethylene film to be laminated with the biaxially stretched polystyrene film is preferably subjected to electric discharge machining such as corona discharge or plasma discharge for enhancing surface tension.

In the bag of the present invention, the above described biaxially stretched polystyrene film is disposed outside the bag and the polyethylene film is disposed inside the bag. It is possible to make full use of the tearability of the inventive film and to obtain a bag product that is easily openable straightly by disposing the biaxially stretched polystyrene film outside.

In the present invention, the bonding method for obtaining a bag product by heat-sealing the laminated film is not limited. Examples of the bonding method include a method of heat sealing by passing two films through heated rolls, a method in which two films are pressed with a heated plate, and the like.

Moreover, the bag according to the present invention is preferably a packaging bag, particularly an easy opening packaging bag which is heat sealed such that the heat sealing lines are positioned on at least two peripheral edges of the bag. For example, in the case of a triangle bag, two folded edges may be heat sealed to make the bag. In the case of a general rectangular bag, three edge-sealing or four-edge sealing may be employed to make a bag product. Alternatively, a pillow-like packaging may be employed. The shape of the bag product may be selected by the suppliers of the bags for filling drugs or food in consideration of the properties of the materials to be contained or the convenience of the users who actually consume the contents. Similarly, the part to be heat sealed or the width of the seal should be appropriately selected by the users.

When a transparent bag is to be obtained in the present invention, the transparency (HAZE) of the laminated film is preferably 70% or less, more preferably 50% or less. A HAZE of 70% or less is preferred because information of the drugs or food contained in the bag after bag-making, such as the type, color, shape, and the like, can be easily observed from the outside. Particularly, in the case of drugs, transparency is an important factor for confirming the identification number or color of the drugs. In this respect, the color of the film is preferably close to colorless.

In the bag of the present invention, an aluminum foil is preferably disposed between the biaxially stretched polystyrene film and the polyethylene film. It is possible to enhance the storage stability of contents by disposing an aluminum foil, thereby improving the moistureproof effect of the bag.

In the present invention, it is possible to use a resin film other than the laminated film of the biaxially stretched polystyrene film and the polyethylene film, when a bag is made, as long as the tearability and the straightness of tear of the laminated film is not impaired. When the tearability and straightness of tear of general resin films (such as polyethylene films, polypropylene films, polyester films, and nylon films) is attempted to be enhanced, the openability of a bag is improved by combining the laminated film of the present invention. However, generally used resin films have very poor tearability and straightness of tear, that is, easy tearability by hand. Therefore, the laminated film preferably includes only the biaxially stretched polystyrene film and the polyethylene film bonded thereto if a bag is needed in which the purpose of easy openability is achieved.

The aluminum foil used in the present invention is preferably of the type 1N30 in the category represented by the aluminum and aluminum alloy foils in accordance with JIS 4160. Aluminum foils are broadly divided into hard foils and soft foils. When a soft foil is used, it is necessary to give consideration to rolling oil remaining on the surface because it exerts an influence upon the adhesiveness of the laminated film. The aluminum foil has a thickness of preferably 3 to 70 µm, more preferably 5 to 50 µm, in consideration of gas barrier properties and tearability.
The aluminum foil having a thickness of 3 µm or more has sufficient gas barrier properties and gives no possibility ofpinholes. Further, the aluminum foil having a thickness of 70 µm or less has high tearability and allows easy opening by hand.

The aluminum foil is preferably coated with a urethane-based, imine-based, or butadiene-based anchor coating agent when it is laminated with the biaxially stretched polystyrene film and the polyethylene film in order to improve adhesion with these films.

The bonding and lamination of the aluminum foil with the biaxially stretched polystyrene film may be performed by any method of wet lamination, dry lamination, non-solvent lamination, extrusion lamination, and the like. When the stretched polystyrene film is laminated to the aluminum foil via an adhesive, the aluminum foil having the adhesive coated and dried is preferably laminated to the polystyrene film.

### Examples

The present invention will now be described by reference to Examples and Comparative examples.

Measurement procedures and criteria for evaluation employed in Examples and Comparative Examples will be described below.

### (1) Vicat softening temperature (hereinafter referred to as Vsp)

Vicat softening temperature was measured in accordance with ASTM-D-1525 (load: 9.8 N, rate of temperature increase: 5°C/min).

### (2) HAZE

HAZE was measured in accordance with ASTM-D 1003 and determined by rounding off the number to one decimal place.

### (3) Appearance inspection of bags after bag making

Appearance inspection of bags after bag making was performed from the following view points.
G: A bag with good appearance without wrinkles and problems due to heat shrinkage in a heat sealed part and on the whole.
F: A bag with poor appearance in which a heat sealed part is a little shrunk.
P: A bag with wrinkles and problems due to heat shrinkage in a heat sealed part and on the whole.

### (4) Tearability of shaped articles (easy openability)

Five samples from the bags after bag making were torn by hand and determined in accordance with the following criteria with the one indicated the best openability defined as a standard.
G: It was possible to tear the sample easily.
F: A small resistance was felt at the tearing.
P: It was difficult to tear the sample.

### (5) Tearability of shaped products (straightness of tear)

Ten samples from the bags after bag making were torn by hand in the direction perpendicular to the edge side and determined if the tearing surface has propagated straightly in the opening direction, in accordance with the following criteria.
G: It was possible to tear all the 10 samples straightly.
F: The tearing surface of 1 to 2 samples has not propagated straightly in the opening direction.
P: The tearing surface of 3 or more samples has not propagated straightly in the opening direction.

### (6) Gas barrier properties

Oxygen permeability: Oxygen permeability was measured in accordance with ASTM-D3985 using OX-TRAN-200H100 (trade name) manufactured by MOCON Company, at 23°C and 65% RH.

Water vapor permeability: Water vapor permeability was measured in accordance with ASTM-F1249 using PERMATRAN, W-200 (trade name) manufactured by MOCON Company, at 38°C and 90% RH.

### (7) Heat shrinkage stress (ORS)

Heat shrinkage stress was determined in accordance with ASTM-D-1504 by measuring the peak value of the orientation release stress (ORS) in a silicone oil bath at a temperature 15°C higher than the Vicat softening temperature of respective resins for the samples (the biaxially stretched polystyrene film and the laminated film) in both the MD and TD directions followed by rounding off the number to the nearest integer value.

### (8) Heat shrinkage

In accordance with ASTM-D-1504A, a sample was prepared, immersed in a silicone oil bath at a temperature of 120°C for 10 seconds, and determined for heat shrinkage (%) from the initial length of the sample and the length of the sample after the immersion.

### <Method for preparing polystyrene film>

### <Tentering method>

An amorphous polystyrene copolymer resin is extruded through a T-die of an extruder having a screw of an L/D=32 and 65 mmφ to form a parison, which is stretched through a heating roll type longitudinal stretching machine and then stretched in the TD direction by a tenter followed by cooling and winding of the sheet to obtain a desired film. The thickness of the film was appropriately adjusted by the die-slit width and the stretch ratio. Extrusion temperature, stretching temperature, and the like are described in Table 1.

### <Inflation method>

An amorphous polystyrene copolymer resin is extruded through a circular die of an extruder having a screw of an L/D=45 and 65 mmφ to form a tube, which is inflated, cooled and wound as a desired film. At this time, the thickness of the film was appropriately adjusted by the diameter of the die and the stretch ratio. Extrusion temperature, stretching temperature, and the like are described in Table 1.

### <Method for preparing laminated film>

### <Poly-lamination method>

The resulting biaxially stretched polystyrene film was used to apply an anchor coating agent on a surface-treated side of the film such that the agent is applied in a dry coating amount of 4 mg/cm² followed by drying. Various types of polyethylene were each extruded on the biaxially stretched polystyrene film at a resin temperature of 320°C such that the polyethylene forms a film having a thickness of 20 µm, thus forming a heat sealing layer of an unstretched polyethylene film to obtain a laminated film.

### <Lamination method>

The resulting biaxially stretched polystyrene film was used to apply an anchor coating agent on a surface-treated side of the film such that the agent is applied in a dry coating amount of 4 mg/cm² followed by drying. Then, a polyethylene film to be used as a heat sealing layer was placed over the biaxially stretched polystyrene film and laminated with heat (at a temperature of 130°C and a line pressure of 2.5 kg/cm) to obtain a laminated film.

### <Preparation of bag>

The laminated film made on an experimental basis was folded in half with the unstretched polyethylene film inside, and four sides of the laminated film were heat-sealed to prepare a packaging bag of 10 cm square. The sealing width was 7 mm; the sealing time was 0.2 second; and the sealing strength was 1 kg/cm². The sealing temperature was 120°C.

Examples 1 to 8 and Comparative Examples 1 to 5 are Examples and Comparative Examples of the bags without aluminum foils according to the present invention, stretching conditions and evaluation results thereof being shown in Table 1.

### Example 1

A styrene-methacrylic acid copolymer resin G9001 (trade name) (crystallinity: 0%) manufactured by PS Japan Corporation was used as an amorphous polystyrene copolymer resin to form a film by the tentering method. Film-forming conditions are shown in Table 1. The resulting film had a Vicat softening temperature of 126°C and a thickness of 21 µm on average. The film was subjected to electrical discharge machining on one side thereof to form a surface having a contact angle of 33 degrees as a wetting index. The film was coated with an imine-based anchor coating agent (EL-420 (trade name) manufactured by Toyo-Morton, Ltd.) on the side subjected to the electrical discharge machining such that the agent was applied in a dry coating amount of about 4 mg/cm² followed by drying. Then, a polyethylene resin L2340 (trade name) manufactured by Asahi Kasei Chemicals Corporation was extruded on the above described biaxially stretched polystyrene film at a die temperature of 320°C so that a film having a thickness of 20 µm is obtained, thus obtaining a laminated film. The resulting laminated film was folded in half with the polyethylene side inside and heat-sealed at a heat sealing temperature of 125°C and a sealing time of 0.2 second to make a four-side sealed bag.

The bag had a good appearance and could be easily torn by hand from any position on heat seal lines in the direction substantially perpendicular to the line. Further, the laminated film was used to make a three-side sealed bag containing powdered drugs by using a bag-making machine CHARTY (registered trademark) manufactured by Yuyama MFG Co., Ltd. The bag had a good appearance and could be easily torn by hand from any position on heat seal lines, and also from the side of the film which was not heat sealed, in the direction substantially perpendicular to the respective sides. Experimental conditions and evaluation results are summarized in Table 1.

### Example 2

A styrene-methacrylic acid copolymer resin G9001 (trade name) (crystallinity: 0%) manufactured by PS Japan Corporation as an amorphous polystyrene copolymer resin was chip-blended with a butyl acrylate/styrene copolymer elastomer SC004 (trade name) manufactured by PS Japan Corporation and a high impact polystyrene (HIPS) HT478 (trade name) manufactured by PS Japan Corporation in a weight ratio of 75:10:15 in this order. The resulting blend was extruded for film-forming by the tentering method. Film-forming conditions are shown in Table 1.

The resulting film had a Vicat softening temperature of 118°C and a thickness of 22 µm on average. The film was used to form a laminated film by the poly-lamination in the same manner as in Example 1. The laminated film was used to make a four-side sealed bag and a three-side sealed bag in the same manner as in Example 1. These bags had a good appearance and could be easily torn by hand from any position on heat seal lines, and also from the side of the film which was not heat sealed, in the direction substantially perpendicular to the respective sides. Experimental conditions and evaluation results are summarized in Table 1.

### Example 3

A styrene-methacrylic acid copolymer resin Ryulex (registered trademark) A-14 (crystallinity: 0%) manufactured by Dainippon Ink and Chemicals, Inc. was used as an amorphous polystyrene copolymer resin to form a film by the tentering method. Film-forming conditions are shown in Table 1. The resulting film had a Vicat softening temperature of 133°C and a thickness of 25 µm on average. The film was used to form a laminated film by the poly-lamination in the same manner as in Example 1. The laminated film was then used to make a four-side sealed bag and a three-side sealed bag in the same manner as in Example 1. These bags had a good appearance and could be easily torn by hand from any position on heat seal lines, and also from the side of the film which was not heat sealed, in the direction substantially perpendicular to the respective sides. Experimental conditions and evaluation results are summarized in Table 1.

### Example 4

A styrene-methacrylic acid copolymer resin Ryulex (registered trademark) A-14 (crystallinity: 0%) manufactured by Dainippon Ink and Chemicals, Inc. as an amorphous polystyrene copolymer resin was chip-blended with a methyl methacrylate/butadiene/styrene copolymer elastomer SX 100 (trade name) manufactured by PS Japan Corporation and a HIPS, HT478 (trade name) manufactured by PS Japan Corporation in a weight ratio of 80:10:10 in this order. The resulting blend was extruded for film-forming by the tentering method. Film-forming conditions are shown in Table 1. The resulting film had a Vicat softening temperature of 128°C and a thickness of 22 µm on average. The film was used to form a laminated film by the poly-lamination in the same manner as in Example 1. The laminated film was then used to make a three-side sealed bag and a four-side sealed bag in the same manner as in Example 1. These bags had a good appearance and could be easily torn by hand from any position on heat seal lines, and also from the side of the film which was not heat sealed, in the direction substantially perpendicular to the respective sides. Experimental conditions and evaluation results are summarized in Table 1.

### Example 5

A styrene-methacrylic acid copolymer resin Ryulex (registered trademark) A-14 (crystallinity: 0%) manufactured by Dainippon Ink and Chemicals, Inc. as an amorphous polystyrene copolymer resin was chip-blended with a methyl methacrylate/butadiene/styrene copolymer elastomer SX100 (trade name) manufactured by PS Japan Corporation and a HIPS, HT478 (trade name) manufactured by PS Japan Corporation in a weight ratio of 90:5:5 in this order. The resulting blend was extruded for film-forming by the tentering method. Film-forming conditions are shown in Table 1. The resulting film had a Vicat softening temperature of 131°C and a thickness of 22 µm on average. The film was then used to form a laminated film by the poly-lamination in the same manner as in Example 1. The laminated film was then used to make a three-side sealed bag and a four-side sealed bag in the same manner as in Example 1. These bags had a good appearance and could be easily torn by hand from any position on heat seal lines, and also from the side of the film which was not heat sealed, in the direction substantially perpendicular to the respective sides. Experimental conditions and evaluation results are summarized in Table 1.

### Example 6

An α-methyl styrene/styrene copolymer resin (crystallinity: 0%) having a copolymerization ratio of α-methyl styrene of 35% by weight used as an amorphous polystyrene copolymer resin was dry-blended with 1% by weight of a HIPS containing 16.4% of a grafted rubber component with an average rubber diameter of 0.8 µm. The resulting blend was subjected to film-forming by the tentering method. Film-forming conditions are shown in Table 1. The resulting film had a Vicat softening temperature of 125°C and a thickness of 23 µm on average. The film was used to form a laminated film by the poly-lamination in the same manner as in Example 1. The laminated film was then used to make a three-side sealed bag and a four-side sealed bag in the same manner as in Example 1. These bags had a good appearance and could be easily torn by hand from any position on heat seal lines, and also from the side of the film which was not heat sealed, in the direction substantially perpendicular to the respective sides. Experimental conditions and evaluation results are summarized in Table 1.

### Example 7

A blend having the same resin composition as in Example 4 was extruded for film-forming by the inflation method (at a stretching temperature of 92°C). The resulting film had a Vicat softening temperature of 128°C and a thickness of 23 µm on average. The film was used to form a laminated film by the poly-lamination in the same manner as in Example 1. The laminated film was then used to make a three-side sealed bag and a four-side sealed bag in the same manner as in Example 1. These bags had a good appearance and could be easily torn by hand from any position on heat seal lines, and also from the side of the film which was not heat sealed, in the direction substantially perpendicular to the respective sides. Experimental conditions and evaluation results are summarized in Table 1.

### Example 8

The same polystyrene film as in Example 4 was subjected to electrical discharge machining on one side thereof to form a surface having a contact angle of 33 degrees as a wetting index. The film was coated with a butadiene-based anchor coating agent Seikadyne 4300 (registered trademark) manufactured by Dainichiseika Color & Chemicals Mfg. Co., Ltd. on the side subjected to electrical discharge machining such that the agent was applied in a dry coating amount of 4 mg/cm² followed by drying. Then, a polyethylene resin Umerit (registered trademark) 015AN manufactured by Ube Industries, Ltd. was extruded on the above described polystyrene film at a die temperature of 300°C so that a film having a thickness of 20 µm is formed, thus obtaining a laminated film. The laminated film was subjected to bag-making processing in the same manner as in Example 4 to make a three-side sealed bag and a four-side sealed bag. These bags had a good appearance and could be easily torn by hand from any position on heat seal lines, and also from the side of the film which was not heat sealed, in the direction substantially perpendicular to the respective sides. Experimental conditions and evaluation results are summarized in Table 1.

### Comparative Example 1

Cellophane (Taiko (registered trademark) PF-3 manufactured by Futamura Chemicals Co., Ltd., having a thickness of 21 µm) was used as a base film to form a laminated film by the poly-lamination in the same manner as in Example 1. The laminated film was then used to make a three-side sealed bag and a four-side sealed bag in the same manner as in Example 1. The bags had good quality but poor tearability. Particularly, tearing by hand from the side of the film which was not heat sealed was possible only by applying a relatively large force. Further, for a part of the samples, when the bag was opened from the heat-sealed side, the tearing surface did not propagate straightly but along a curved path, sometimes causing the contents to be spilled over.

### Comparative Example 2

A polypropylene film (Tocello OP (registered trademark) manufactured by Tokyo Cellophane Co., Ltd., having a thickness of 20 µm) was used as a base film to form a laminated film by the poly-lamination in the same manner as in Example 1. The laminated film was then used to make a three-side sealed bag and a four-side sealed bag in the same manner as in Example 1. The bags had an impaired appearance with wrinkles generated on the heat sealed surfaces thereof and poor tearability. Particularly, it was almost impossible to tear the bag by hand from the side of the film which was not heat sealed and only possible when the bag was notched with a pair of scissors. Further, when the bag is opened from the heat-sealed side, the tearing surface did not propagate straightly but along a curved path, sometimes causing the contents to be spilled over, or the tearing surface stretched, almost always causing the contents to be spilled over.

### Comparative Example 3

An OPS film (registered trademark) GM25 (crystallinity: 0%) having a thickness of 25 µm manufactured by Asahi-Kasei Life & Living Corporation was used as a polystyrene film to form a laminated film by the poly-lamination in the same manner as in Example 1. The laminated film was then used to make a three-side sealed bag and a four-side sealed bag in the same manner as in Example 1. The bags were formed, but they had poor quality, shrinkage being observed in a part of them. Further, the film of each bag could be torn only with difficulty, but the tearability was poor.

### Comparative Example 4

A polystyrene film Celomer (registered trademark) 30 (crystallinity: 0%) having a thickness of 30 µm manufactured by Ohishi Sangyo Co., Ltd. was used as a polystyrene film to form a laminated film by the poly-lamination in the same manner as in Example 1. The laminated film was then used to make a three-side sealed bag and a four-side sealed bag in the same manner as in Example 1. In the poly-lamination, the film shrank to form a poor-quality laminated film. The poor-quality laminated film was then used to make a bag, but it was impossible to obtain a good bag. Further, when the laminated film was applied to a bag-making machine CHARTY (registered trademark) manufactured by Yuyama MFG Co., the machine stopped in the middle of the operation due to the shrinkage of the film. The film of each bag had too poor a tearability to be evaluated properly. A forced attempt to tear that was almost unsuccessful.

### Comparative Example 5

A styrene-methacrylic acid copolymer resin (crystallinity: 0%) was used as an amorphous polystyrene copolymer resin to form a film. Film-forming conditions are shown in Table 1. The resulting film had a Vicat softening temperature of 107°C and a thickness of 22 µm on average. The film was used to form a laminated film by the poly-lamination in the same manner as in Example 1. The laminated film was then used to make a three-side sealed bag and a four-side sealed bag in the same manner as in Example 1. The bags were formed, but they had poor quality, shrinkage being observed in a part of them. Further, the films could be torn only with difficulty, but the tearability was poor. Experimental conditions and evaluation results are summarized in Table 1.

The followings are Examples and Comparative Examples for a bag in which an aluminum foil was interleaved as an interlayer.

### Example 9

A copolymer resin G9001 (trade name) (crystallinity: 0%) manufactured by PS Japan Corporation was used as an amorphous polystyrene copolymer resin to form a film by the tentering method. Film-forming conditions are shown in Table 2. The resulting film had a Vicat softening temperature of 126°C and a thickness of 21 µm on average. The film was subjected to electrical discharge machining on one side thereof to form a surface having a contact angle of 33 degrees as a wetting index, thus forming a polystyrene resin film. The film was then coated with an imine-based anchor coating agent (EL-420 (trade name) manufactured by Toyo-Morton, Ltd.) on the side subjected to the electrical discharge machining such that the agent was applied in a dry coating amount of about 4 mg/cm² followed by drying, thus obtaining a polystyrenic resin film (PS-9). Then, the same anchor coating agent as described above was applied to an aluminum foil of 9 µm (SA30 (trade name) manufactured by Sumitomo Light Metal Industries, Ltd.) in a dry coating amount of about 40 mg/cm² followed by drying (AL-1). Then, a polyethylene resin L2340 (trade name) manufactured by Asahi Kasei Chemicals Corporation (PE-1) was extruded between the obtained PS-9 and AL-1 at a temperature immediately after a die of 320°C so that a film having a thickness of 15 µm is obtained, thus sandwich-laminating PS-1 and AL-1, wherein the polyethylene resin was subjected to ozone treatment during the extrusion. Then, the same polyethylene resin as described above was extruded on the aluminum foil of the resulting laminated film (PS-1/PE-1/AL-1) under the same conditions so that a film having a thickness of 30 µm is obtained, thus forming a heat sealing layer (PE-1').

The resulting laminated film (PS-9/PE-1/AL-1/PE-1') was folded in half with the polyethylene side inside and heat-sealed at a heat sealing temperature of 150°C and a sealing time of 0.2 second to make a four-side sealed bag. A sample of the laminated film taken from one side of the bag was evaluated for gas barrier properties. The bag had a good appearance and could be easily torn by hand from any position on heat seal lines in the direction substantially perpendicular to the line. Further, the laminated film was used to make a three-side sealed bag containing powdered drugs by using a bag-making machine manufactured by Topack Co., Ltd. The bag had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 10

A copolymer resin G9001 (trade name) (crystallinity: 0%) manufactured by PS Japan Corporation as an amorphous polystyrene copolymer resin was chip-blended with a butyl acrylate/styrene copolymer elastomer SC004 (trade name) manufactured by PS Japan Corporation and a HIPS, HT478 (trade name) manufactured by PS Japan Corporation in a weight ratio of 75:10:15 in this order. The resulting blend was extruded for film-forming by the tentering method. The resulting film had a Vicat softening temperature of 118°C and a thickness of 22 µm on average. The film was subjected to electrical discharge machining on one side thereof to form a surface having a contact angle of 33 degrees as a wetting index followed by after treatment in the same manner as in Example 9, thus forming a polystyrenic resin film (PS-10). Then, the film was used for lamination in the same manner as in Example 1 to obtain a laminated film (PS-10/PE-1/AL-1/PE-1'), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 11

A copolymer resin Ryulex (registered trademark) A-14 (crystallinity: 0%) manufactured by Dainippon Ink and Chemicals, Inc. was used as an amorphous polystyrene copolymer resin to form a film by the tentering method. Film-forming conditions are shown in Table 2. The resulting film had a Vicat softening temperature of 133°C and a thickness of 25 µm on average. The film was subjected to electrical discharge machining on one side thereof to form a surface having a contact angle of 33 degrees as a wetting index followed by after treatment in the same manner as in Example 9, thus forming a polystyrenic resin film (PS-11). Then, the film was used for lamination in the same manner as in Example 9 to obtain a laminated film (PS-11/PE-1/AL-1/PE-1'), which was used for making bags in the same manner as in Example 1 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 12

A copolymer resin Ryulex (registered trademark) A-14 (crystallinity: 0%) manufactured by Dainippon Ink and Chemicals, Inc. as an amorphous polystyrene copolymer resin was chip-blended with a methyl methacrylate/butadiene/styrene copolymer elastomer SX100 (trade name) manufactured by PS Japan Corporation and a HIPS, HT478 (trade name) manufactured by PS Japan Corporation in a weight ratio of 80:10:10 in this order. The resulting blend was extruded for film-forming by the tentering method. The resulting film had a Vicat softening temperature of 128°C and a thickness of 22 µm on average. The film was subjected to electrical discharge machining on one side thereof to form a surface having a contact angle of 33 degrees as a wetting index followed by after treatment in the same manner as in Example 9, thus forming a polystyrenic resin film (PS-12). Then, the film was used for lamination in the same manner as in Example 1 to obtain a laminated film (PS-12/PE-1/AL-1/PE-1'), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 13

A copolymer resin Ryulex (registered trademark) A-14 (crystallinity: 0%) manufactured by Dainippon Ink and Chemicals, Inc. as an amorphous polystyrene copolymer resin was chip-blended with a methyl methacrylate/butadiene/styrene copolymer elastomer SX100 (trade name) manufactured by PS Japan Corporation and a HIPS, HT478 (trade name) manufactured by PS Japan Corporation in a weight ratio of 90:5:5 in this order. The resulting blend was extruded for film-forming by the tentering method. The resulting film had a Vicat softening temperature of 131°C and a thickness of 22 µm on average. The film was subjected to electrical discharge machining on one side thereof to form a surface having a contact angle of 33 degrees as a wetting index followed by after treatment in the same manner as in Example 9, thus forming a polystyrenic resin film (PS-13). Then, the film was used for lamination in the same manner as in Example 9 to obtain a laminated film (PS-13/PE-1/AL-1/PE-1'), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 14

An α-methyl styrene/styrene copolymer resin (crystallinity: 0%) having a copolymerization ratio of α-methyl styrene of 35% by weight used as an amorphous polystyrene copolymer resin was dry-blended with 1 % by weight of a HIPS containing 16.4% of a grafted rubber component with an average rubber diameter of 0.8 µm. The resulting blend was subjected to film-forming by the tentering method. Film-forming conditions are shown in Table 2. The resulting film had a Vicat softening temperature of 125°C and a thickness of 23 µm on average. The film was subjected to electrical discharge machining on one side thereof to form a surface having a contact angle of 33 degrees as a wetting index followed by after treatment in the same manner as in Example 9, thus forming a polystyrenic resin film (PS-14). Then, the film was used for lamination in the same manner as in Example 9 to obtain a laminated film (PS-14/PE-1/AL-1/PE-1'), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 15

A blend having the same resin composition as in Example 12 was extruded for film-forming by the inflation method. The resulting film had a Vicat softening temperature of 128°C and a thickness of 23 µm on average. The film was subjected to electrical discharge machining on one side thereof to form a surface having a contact angle of 33 degrees as a wetting index followed by after treatment in the same manner as in Example 9, thus forming a polystyrenic resin film (PS-15). Then, the film was used for lamination in the same manner as in Example 9 to obtain a laminated film (PS-15/PE-I/AL-1/PE-1'), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 16

A blend having the same resin composition as in Example 12 was extruded for film-forming by the tentering method, wherein only the stretch ratio was changed. The stretch ratio was 2 times in the MD direction and 6 times in the TD direction. The resulting film had a Vicat softening temperature of 128°C and a thickness of 22 µm on average. The film was subjected to electrical discharge machining on one side thereof to form a surface having a contact angle of 33 degrees as a wetting index followed by after treatment in the same manner as in Example 9, thus forming a polystyrenic resin film (PS-16). It was difficult to tear the PS-8 film in the MD direction by hand, and the film showed better tearability in the TD direction. Then, the film was used for lamination in the same manner as in Example 9 to obtain a laminated film (PS-16/PE-1/AL-1/PE-1'), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2. In this experiment, the bag showed good tearability by hand in the TD direction and straightness of the tear, but it was very difficult to tear the film in the MD direction. Table 2 shows the results of evaluations in consideration of the anisotropy of tearability.

### Example 17

The same polystyrene film (PS-17) and aluminum foil (AL-17) as used in Example 12 except that the aluminum foil had a thickness of 40 µm were used for lamination in the same manner as in Example 9 to obtain a laminated film (PS-17/PE-1/AL-17/PE-1'), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Example 18

The same polystyrene film as used in Example 12 was used (PS-18). A polyethylene resin (Umerit (registered trademark) 015AN manufactured by Ube Industries, Ltd.) was extruded at a temperature of 300°C so that a film having a thickness of 55 µm (PE-18) is formed, the resulting film being used as an outer layer for heat sealing. These films were used for lamination in the same manner as in Example 9 to obtain a laminated film (PS-18/PE-1/AL-17/PE-18), which was used for making bags in the same manner as in Example 9 for evaluation. These bags had a good appearance and could be easily torn by hand from any position on heat seal lines, and also from the side of the film which was not heat sealed, in the direction substantially perpendicular to the respective sides. Experimental conditions and evaluation results are summarized in Table 2.

### Comparative Example 6

Cellophane (Taiko (registered trademark) PF-3 manufactured by Futamura Chemicals Co., Ltd., having a thickness of 21 µm) was used as a base film to form a laminated film (CE-5/PE-1/AL-1/PE-1') by the poly-lamination in the same manner as in Example 9. The laminated film was then used to make a three-side sealed bag and a four-side sealed bag in the same manner. The bags had good quality but poor tearability. Particularly, tearing by hand except from the heat-sealed part was possible only by applying a relatively large force. Further, for a part of the samples, when the bag was opened from the heat-sealed side, the tearing surface did not propagate straightly but propagated along a curved path, sometimes causing the contents to be spilled over. The results are summarized in Table 3.

### Comparative Example 7

An OPS film (registered trademark) GM25 (crystallinity: 0%) having a thickness of 25 µm manufactured by Asahi-Kasei Life & Living Corporation was used as a polystyrene film to form a laminated film by the poly-lamination in the same manner as in Example 9. The film was subjected to electrical discharge machining on one side thereof to form a surface having a contact angle of 33 degrees as a wetting index followed by after treatment in the same manner as in Example 9, thus forming a polystyrenic resin film (GPS-6). Then, the film was used for lamination in the same manner as in Example 9 to obtain a laminated film (GPS-6/PE-1/AL-1/PE-1'), which was used for making bags in the same manner as in Example 9 for evaluation. The laminated film was used to make a three-side sealed bag and a four-side sealed bag in the same manner as in Example 9. The bags were formed, but they had poor quality, shrinkage being observed in a part of them. Further, the film of each bag could be torn only with difficulty, but the tearability was poor. The results are summarized in Table 3.

### Comparative Example 8

A polystyrene film Celomer (registered trademark) HA30CPS film GK (crystallinity: 0%) having a thickness of 30 µm manufactured by Ohishi Sangyo Co., Ltd. was subjected to electrical discharge machining on one side thereof to form a surface having a contact angle of 33 degrees as a wetting index followed by after treatment in the same manner as in Example 9, thus forming a polystyrenic resin film (CPS-7). Then, the film was used for lamination in the same manner as in Example 9 to obtain a laminated film (CPS-7/PE-1/AL-1/PE-1'), which was used for making bags in the same manner as in Example 9 for evaluation. In the poly-lamination, the film shrank to form a poor-quality laminated film. The poor-quality laminated film was then used to make a bag, but it was impossible to obtain a good bag. Further, when the laminated film was applied to a bag-making machine, the machine stopped in the middle of the operation due to the shrinkage of the film. The film of each bag had too poor a tearability to be evaluated properly. A forced attempt to tear that was almost unsuccessful. The results are summarized in Table 3.

### Comparative Example 9

A styrene-methacrylic acid copolymer resin (crystallinity: 0%) was used as a polystyrene resin to form a film. Film-forming conditions are shown in Table 3. The resulting film had a Vicat softening temperature of 107°C and a thickness of 22 µm on average. The film was subjected to electrical discharge machining on one side thereof to form a surface having a contact angle of 33 degrees as a wetting index followed by after treatment in the same manner as in Example 9, thus forming a polystyrenic resin film (PS-H4). Then, the film was used for lamination in the same manner as in Example 9 to obtain a laminated film (PS-H4/PE-1/AL-1/PE-1'), which was used for making bags in the same manner as in Example 9 for evaluation. The bags were formed, but they had poor quality, shrinkage being observed in a part of them. Further, the films could be torn only with difficulty, but the tearability was poor. The experimental conditions and evaluation results are summarized in Table 3.

### Comparative Example 10

A polyester film TF110 (trade name) having a thickness of 16 µm (crystallinity: 0%) manufactured by Toyobo Co., Ltd. was used as a resin film for the surface. This film was subjected to electrical discharge machining on one side thereof to form a surface having a contact angle of 33 degrees as a wetting index followed by after treatment in the same manner as in Example 9, thus forming a polyester-based resin film (PET-9). Then, the film was used for lamination in the same manner as in Example 9 to obtain a laminated film (PET-9/PE-1/AL-1/PE-1'), which was used for making bags in the same manner as in Example 9 for evaluation. The bags had good quality but poor tearability. Particularly, tearing by hand except from the heat-sealed part was possible only by applying a relatively large force. Further, for a part of the samples, when the bag was opened from the heat-sealed side, the tearing surface did not propagate straightly but propagated along a curved path, sometimes causing the contents to be spilled over. The results are summarized in Table 3.

**[Table 1]**

| | | | Examples | | | | | | | | Comparative Examples | | | | |
|---|---|---|---|---|---|---|---|---|---|---|---|---|---|---|---|
| | | | 1 | 2 | 3 | 4 | 5 | 6 | 7 | 8 | 1 | 2 | 3 | 4 | 5 |
| Properties of PS film | Softening temperature | | 126 | 118 | 133 | 128 | 131 | 125 | 128 | 128 | | | 105 | | 107 |
| | Thickness | | 21 | 22 | 25 | 22 | 22 | 23 | 23 | 22 | 20 | 20 | 25 | 30 | 22 |
| | ORS | MD | 0.4 | 0.3 | 0.7 | 1.0 | 1.2 | 1.1 | 2.4 | 1.0 | | | 5.5 | 0.6 | 0.03 |
| | | TD | 1.3 | 0.5 | 0.9 | 1.9 | 2.0 | 1.8 | 0.4 | 1.9 | | | 1.6 | 0.3 | 0.05 |
| | HAZE | | 0.5 | 23 | 1.1 | 10 | 5 | 1.3 | 13 | 10 | 1.6 | | 11 | | 21 |
| | Heat shrinkage | | | | | | | | | | | | | | |
| | | MD | 0 | 3 | 0 | 0 | 0 | 0 | 1 | 0 | 0 | 0 | 35 | 27 | 24 |
| | | TD | 1 | 5 | 0 | 1 | 0 | 1 | 1 | 1 | 0 | 0 | 27 | 20 | 30 |
| | Dietemperature | | 220 | 220 | 235 | 235 | 235 | 220 | 215 | 235 | - | - | - | - | 220 |
| Production | MD stretch ratio | | 2.5 | 2 | 2.5 | 2 | 2 | 2 | 10 | 2 | - | - | - | - | 2 |
| conditions | TD stretch ratio | | 4 | 4 | 4 | 4.5 | 4 | 4 | 5 | 4.5 | - | - | - | - | 4 |
| | Stretching temperature | | 145 | 150 | 155 | 145 | 150 | 145 | 92 | 145 | - | - | - | - | 145 |
| Four-side | Appearance | | G | G | G | G | G | G | G | G | G | F | F | F | F |
| sealed | Tearability | | G | G | G | G | G | G | G | G | F | P | F | F | F |
| bags | Straightness | | G | G | G | G | G | G | G | G | P | P | F | P | F |
| Three-side | Appearance | | G | G | G | G | G | G | G | G | G | F | P | P | F |
| sealed bags | Tearability (sealed side) | | G | G | G | G | G | G | G | G | F | P | F | P | F |
| | Tearabitity (folded side) | | G | G | G | G | G | G | G | G | P | P | P | P | F |
| | Straightness | | G | G | G | G | G | G | G | G | P | P | F | P | F |

| | | | | | | | | | | | | | | | |
|---|---|---|---|---|---|---|---|---|---|---|---|---|---|---|---|
| Note) Units in the table: Vicat softening temperature: °C, Film thickness: µm, H-42E: %, Molding temperatures: °C ORS: MPa Heat shrinkage: % Note) In the table, four-side sealed bags were made by a heat-sealing machine, and three-side sealed bags were made by a powder folder SHARTY. | | | | | | | | | | | | | | | |

**[Table 2]**

| | | | Examples | | | | | | | | | |
|---|---|---|---|---|---|---|---|---|---|---|---|---|
| | | | 9 | 10 | 11 | 12 | 13 | 14 | 15 | 16 | 17 | 18 |
| Properties of PS film | Softening temperature | | 126 | 118 | 133 | 128 | 131 | 125 | 128 | 128 | 128 | 128 |
| | Thickness | | 21 | 22 | 25 | 22 | 22 | 23 | 23 | 22 | 23 | 22 |
| | ORS | MD | 0.4 | 0.3 | 0.7 | 1.0 | 1.2 | 1.1 | 2.4 | 0.8 | 1.0 | 1.0 |
| | | TD | 1.3 | 0.5 | 0.9 | 1.9 | 2.0 | 1.8 | 0.4 | 5.4 | 1.9 | 1.9 |
| | Heat shrinkage | MD | 0 | 3 | 0 | 0 | 0 | 0 | 1 | 0 | 0 | 0 |
| | | TD | 1 | 5 | 0 | 1 | 0 | 1 | 1 | 1 | 1 | 1 |
| Production conditions | Extrusion temperature | | 220 | 220 | 235 | 235 | 235 | 220 | 215 | 235 | 220 | 235 |
| | MD stretch ratio | | 2.5 | 2 | 2.5 | 2 | 2 | 2 | 10 | 2 | 2 | 2 |
| | TD stretch ratio | | 4 | 4 | 4 | 4.5 | 4 | 4 | 5 | 6 | 4.5 | 4.5 |
| | Stretching temperature | | 145 | 150 | 155 | 145 | 150 | 145 | 92 | 150 | 145 | 145 |
| Four-side sealed bags | Appearance | | G | G | G | G | G | G | G | G | G | G |
| | Tearability | | G | G | G | G | G | G | G | G | G | G |
| Three-side sealed bags | Appearance | | G | G | G | G | G | G | G | G | G | G |
| | Tearability (sealed side) | | G | G | G | G | G | G | G | G | G | G |
| | Tearability (folded side) | | G | G | G | G | G | G | G | G | G | G |
| Gas permeability | Oxygen barrier Properties | | <1 | <1 | <1 | <1 | <1 | <1 | <1 | <1 | <1 | <1 |
| | Water vapor barrier properties | | <1 | <1 | <1 | <1 | <1 | <1 | <1 | <1 | <1 | <1 |

| | | | | | | | | | | | | |
|---|---|---|---|---|---|---|---|---|---|---|---|---|
| Note) Units in the table: Vicat softening temperature: °C, Film thickness: µm, Molding temperatures: °C Oxygen barrier properties: cc/m²·day·atm, Water vapor barrier properties: cc/m²·day ORS: MPa Heat shrinkage: % Note) In the table, four-side sealed bags were made by a heat-sealing machine, and three-side sealed bags were made by a bag-making machine. | | | | | | | | | | | | |

**[Table 3]**

| | | | Comparative Examples | | | | |
|---|---|---|---|---|---|---|---|
| | | | 6 | 7 | 8 | 9 | 10 |
| Properties of film | Softening temperature | | - | 105 | 105 | 107 | - |
| | Thickness | | 21 | 25 | 30 | 22 | 16 |
| | ORS | MD | | 5.5 | 0.6 | 0.03 | |
| | | TD | | 1.6 | 0.3 | 0.05 | |
| | Heat shrinkage | | | | | | |
| | | MD | 0 | 35 | 27 | 24 | 0 |
| | | TD | 0 | 27 | 20 | 30 | 0 |
| Production conditions | Extrusion temperature | | - | - | - | 220 | - |
| | MD stretch ratio | | - | - | - | 2 | - |
| | TD stretch ratio | | - | - | - | 4 | - |
| | Stretching temperature | | - | - | - | 140 | - |
| Four-side sealed bags | Appearance | | G | F | F | F | G |
| | Tearability | | F | F | P | F | P |
| Three-side sealed bags | Appearance | | G | P | P | F | G |
| | Tearability (sealed side) | | F | F | P | F | P |
| | Tearability (folded side) | | P | P | P | F | P |
| Gas permeability | Oxygen barrier properties | | <1 | <1 | <1 | <1 | <1 |
| | Water vapor barrier properties | | <1 | <1 | <1 | <1 | <1 |

| | | | | | | | |
|---|---|---|---|---|---|---|---|
| In the table, units and conditions are the same as in Table 2. | | | | | | | |

### Industrial Applicability

The present invention can be suitably used in the field of easily-opened bags.

## Claims

1. A bag comprising a laminated film of (a) a polystyrene film which comprises an amorphous polystyrene copolymer resin and has a Vicat softening temperature of 110 to 155°C, which is measured in accordance with ASTM-D-1525; and (b) a polyethylene film, **characterised in that** the polystyrene film is biaxially stretched and is disposed outside the bag and the polyethylene film is disposed inside the bag.

2. The bag according to claim 1, **characterized in that** an aluminum foil is disposed between the biaxially stretched polystyrene film and the polyethylene film.

3. The bag according to claim 1, **characterized in that** the biaxially stretched polystyrene film has a heat shrinkage stress of 300 KPa to 6,000 KPa, which is measured in accordance with ASTM-D-1504.

4. The bag according to claim 1, **characterized in that** the amorphous polystyrene copolymer resin comprises at least one selected from the group of a styrene-acrylic acid copolymer resin, a styrene-methacrylic acid copolymer resin, a styrene-maleic anhydride copolymer resin, and a styrene-α-methyl styrene copolymer resin.

5. The bag according to claim 1, **characterized in that** the biaxially stretched polystyrene film comprises at least one polystyrene copolymer elastomer selected from the group of a high-impact polystyrene, a styrene-conjugated diene copolymer, and a styrene-aliphatic carboxylic acid copolymer in an amount of 0.5 to 35% by weight.

6. The bag according to claim 1, **characterized in that** the laminated film has a HAZE of 70% or less.

7. The bag according to claim 1, **characterized in that** the polyethylene film contains an antistatic agent.

8. The bag according to claim 1, **characterized in that** the laminated film comprises only the biaxially stretched polystyrene film and the polyethylene film bonded thereto.

9. The bag a according to claim 8, **characterized in that** the biaxially stretched polystyrene film and the polyethylene film are bonded with an adhesive.

## Patentansprüche

1. Tasche, umfassend eine laminierte Folie aus (a) einer Polystyrolfolie, die ein amorphes Polystyrol-Copolymerharz umfasst und eine Vicat-Erweichungstemperatur von 110 bis 155°C aufweist, die entsprechend ASTM-D-1525 gemessen wird; und (b) einer Polyethylenfolie, **dadurch gekennzeichnet, dass** die Polystyrolfolie biaxial gestreckt und auf der Aussenseite der Tasche angeordnet ist und die Polyethylenfolie innerhalb der Tasche angeordnet ist.

2. Tasche gemäss Anspruch 1, **dadurch gekennzeichnet, dass** eine Aluminiumfolie zwischen der biaxial gestreckten Polystyrolfolie und der Polyethylenfolie angeordnet ist.

3. Tasche gemäss Anspruch 1, **dadurch gekennzeichnet, dass** die biaxial gestreckte Polystyrolfolie eine Wärmeschrumpfspannung von 300 bis 6.000 KPa aufweist, die gemäss ASTM-D-1504 gemessen wird.

4. Tasche gemäss Anspruch 1, **dadurch gekennzeichnet, dass** das amorphe Polystyrol-Copolymerharz mindestens eines umfasst, das aus der Gruppe von Styrol-Acrylsäure-Copolymerharz, Styrol-Methacrylsäure-Copolymerharz, Styrol-Maleinsäureanhydrid-Copolymerharz und Styrol-α-Methylstyrol-Copolymerharz ausgewählt ist.

5. Tasche gemäss Anspruch 1, **dadurch gekennzeichnet, dass** die biaxial gestreckte Polystyrolfolie mindestens ein Polystyrol-Copolymer-Elastomer, das aus der Gruppe bestehend aus schlagfestem Polystyrol, Styrol-konjugiertes Dien-Copolymer und Styrolaliphatische Carbonsäure-Copolymer ausgewählt ist, in einer Menge von 0,5 bis 35 Gew.% umfasst.

6. Tasche gemäss Anspruch 1, **dadurch gekennzeichnet, dass** die laminierte Folie einen HAZE von 70 % oder weniger aufweist.

7. Tasche gemäss Anspruch 1, **dadurch gekennzeichnet, dass** die Polyethylenfolie ein Antistatikmittel enthält.

8. Tasche gemäss Anspruch 1, **dadurch gekennzeichnet, dass** die laminierte Folie nur die biaxial gestreckte Polystyrolfolie und die hieran gebundene Polyethylenfolie umfasst.

9. Tasche gemäss Anspruch 8, **dadurch gekennzeichnet, dass** die biaxial gestreckte Polystyrolfolie und die Polyethylenfolie mit einem Adhäsiv gebunden sind.

## Revendications

1. Sac comportant une feuille stratifiée constituée (a) d'un film de polystyrène qui comprend une résine de copolymère de polystyrène amorphe et présente une température de point de ramollissement de Vicat de 110 à 155° C, laquelle est mesurée en conformité avec la norme ASTM-D-1525 ; et (b) d'un film de polyéthylène, **caractérisé en ce que** le film de polystyrène est étiré bi-axialement et est disposé à l'extérieur du sac et **en ce que** le film de polyéthylène est disposé à l'intérieur du sac.

2. Sac selon la revendication 1, **caractérisé en ce qu'**une feuille d'aluminium est disposée entre le film de polystyrène étiré bi-axialement et le film de polyéthylène.

3. Sac selon la revendication 1, **caractérisé en ce que** le film de polystyrène étiré bi-axialement présente une contrainte de retrait thermique de 300KPa à 6 000 KPa, laquelle est mesurée selon la norme ASTM-D-1504.

4. Sac selon la revendication 1, **caractérisé en ce que** la résine de copolymère de polystyrène amorphe comprend au moins une résine sélectionnée à partir du groupe de résines constitué d'une résine de copolymère d'acide acrylique et de styrène, d'une résine de copolymère d'acide méthacrylique et de styrène, d'une résine de copolymère d'anhydride maléique et de styrène et d'une résine de copolymère de styrène et de α-méthyle styrène.

5. Sac selon la revendication 1, **caractérisé en ce que** le film de polystyrène étiré bi-axialement comporte au moins un élastomère à base de copolymère de polystyrène sélectionné à partir du groupe d'un polystyrène à résilience élevée, d'un copolymère de diène conjugué et de styrène et d'un copolymère d'acide carboxylique aliphatique et de styrène dans une quantité allant de 0,5 à 35% en poids.

6. Sac selon la revendication 1, **caractérisé en ce que** la feuille stratifiée présente une transparence (HAZE) de 70% ou moins.

7. Sac selon la revendication 1, **caractérisé en ce que** le film de polyéthylène contient un agent antistatique.

8. Sac selon la revendication 1, **caractérisé en ce que** la feuille stratifiée comprend seulement le film de polystyrène étiré bi-axialement et le film de polyéthylène lié au précédent.

9. Sac selon la revendication 8, **caractérisé en ce que** le film de polystyrène étiré bi-axialement et le film de polyéthylène sont liés avec un adhésif.
